# EUROPEAN PATENT APPLICATION

(11) **EP 4 686 401 A1**
(43) Date of publication of application: **04.02.2026**
(21) Application number: 25192718.2
(22) Date of filing: 30.07.2025
(51) Int. Cl.: A01K 1/02, B60R 22/10

(54) **PET CARRIER**

(30) Priority: 31.07.2024 CN 202411048713
(71) Applicant: Jani International Pte. Ltd., Singapore 569874 (SG)
(72) Inventor: LI, Ruyi, 569874 Singapore (SG); MO, Xiaolong, 569874 Singapore (SG); WANG, Qiaofeng, 569874 Singapore (SG)
(74) Representative: Pfenning, Meinig & Partner mbB

(57) **Abstract**

A pet carrier (100) is mounted on a vehicle device between a front passenger seat (300) and a driver seat (400) and includes a fixing structure for fixing with a corresponding fixing facility inside a vehicle, to fix the pet carrier (100) on the vehicle device between the front passenger seat (300) and the driver seat (400). The pet carrier (100) of the present disclosure balances safety and fun.

## Description

### TECHNICAL FIELD

The present disclosure relates to the technical field of pet products and, more specifically, to a pet carrier.

### BACKGROUND

At present, a pet carrier is generally fixed to a rear seat of a vehicle when used in the vehicle, so it is impossible for an owner sitting in the front passenger seat to interact and play with a pet in the pet carrier, or for an owner sitting in the driver seat to interact and play with the pet in the vehicle without affecting driving safety, which degrades user experience and overall satisfaction of the existing vehicle-mounted pet carrier, and lacks fun.

Accordingly, there is a need to develop a pet carrier that can solve the above problems.

### SUMMARY

An objective of the present disclosure is to provide a pet carrier that may be fixed between front seats of a vehicle.

An objective of the present disclosure is to provide a pet carrier that may balance safety and fun.

In order to achieve at least one of the above objectives, the present disclosure provides a pet carrier mounted on a vehicle device between a front passenger seat and a driver seat. The pet carrier includes a fixing structure for fixing with a corresponding fixing facility inside a vehicle, to fix the pet carrier on the vehicle device between the front passenger seat and the driver seat.

According to an embodiment, the fixing structure includes a front fixing structure on a longitudinal front side of the pet carrier and a rear fixing structure on a longitudinal rear side of the pet carrier, and/or a side fixing structure on a transverse side of the pet carrier; the vehicle device includes an armrest compartment between the front passenger seat and the driver seat.

According to an embodiment, the front fixing structure includes a front fixing strap extending out from the longitudinal front side of the pet carrier and a front connector provided on the front fixing strap, and the front connector is fixed to a limiting structure located in a front row of the vehicle.

According to an embodiment, the front connector is a ladder lock buckle capable of adjusting a length of the front fixing strap, the limiting structure is the armrest compartment or a glove compartment, and the front connector is stuck inside the compartment by placing the front connector in the armrest compartment or the glove compartment and closing a compartment cover thereof; or the front fixing strap is provided with a length adjuster configured to adjust a length of the front fixing strap, the front connector is a snap fastener provided at a distal end of the front fixing strap, the limiting structure is an armrest compartment with an openable and closable armrest compartment cover or a glove compartment with an openable and closable glove compartment cover, and the front connector is stuck inside the compartment by placing the front connector in the armrest compartment or the glove compartment and closing the armrest compartment cover or the glove compartment cover; or the front connector is configured as one or more loops, and the limiting structure is a passenger seat belt fixing mechanism and/or a driver seat belt fixing mechanism, and the one or more loops are fitted over the front passenger seat belt fixing mechanism and/or the driver seat belt fixing mechanism for fixation.

According to an embodiment, the rear fixing structure includes a rear fixing strap extending out from the longitudinal rear side of the pet carrier and a rear connector provided on the rear fixing strap, and the rear connector is configured to be anchored and coupled to an anchoring structure on a rear seat.

According to an embodiment, the rear fixing strap is provided with a length adjuster to adjust a length of the rear fixing strap, and/or the rear fixing strap includes a first fixing strap and a second fixing strap; the first fixing strap extends out from the longitudinal rear side of the pet carrier, and one of a buckle or a socket is provided at a free end of the first fixing strap; one end of the second fixing strap is provided with another of the buckle or the socket, to engage with the first fixing strap, and the rear connector is provided at another end of the second fixing strap.

According to an embodiment, the side fixing structure includes a side fixing strap extending out from a transverse side of the pet carrier and a side connector provided on the side fixing strap, and the side connector is able to be fixed to the front passenger seat and/or the driver seat.

According to an embodiment, the side fixing strap is provided with a length adjuster to adjust a length of the side fixing strap, and the side connector is provided at a distal end of the side fixing strap.

According to an embodiment, the side connector is a webbing retainer capable of being adjusted and tightened; the side fixing strap is provided with an adjuster to adjust a size of the webbing retainer; the webbing retainer is fixed by being fitted and tightened onto a headrest of the front passenger seat and/or the driver seat, or onto a neck portion between the headrest and a backrest of the front passenger seat and/or the driver seat.

According to an embodiment, the pet carrier includes a box and a base, the box is fixed on the base, and the fixing structure is disposed on the box and/or the base; a periphery of the box and/or the base is provided with a storage groove for storing the fixing structure.

The pet vehicle of the present disclosure may be used safely when the vehicle is travelling, ensure the safety of both users and pets, enhance pleasure and satisfaction of the users and the pets, and balance safety and fun.

### BRIEF DESCRIPTION OF THE DRAWINGS

By considering the following detailed description of preferred embodiments of the present disclosure in conjunction with the accompanying drawings, various objectives, features, and advantages of the present disclosure will become more apparent. The accompanying drawings are only exemplary illustration of the present disclosure and not necessarily drawn to scale. In the accompanying drawings, the same reference numerals indicate the same or similar components.
FIG. 1 is a schematic front view of a pet carrier according to an embodiment of the present disclosure, showing a mounting position of the pet carrier in a vehicle;
FIG. 2 is a schematic side view of a pet carrier according to an embodiment of the present disclosure, wherein a canopy of the pet carrier is in a semi-open state, and a rear fixing structure thereof may be anchored and coupled to an anchoring structure of a rear seat;
FIG. 3 is a schematic side view of a pet carrier according to an embodiment of the present disclosure, wherein a canopy of the pet carrier is in a fully open state, and a rear fixing structure thereof may be anchored and coupled to an anchoring structure of a rear seat;
FIG. 4 is a schematic side view of a pet carrier according to an embodiment of the present disclosure, wherein a canopy of the pet carrier is in a fully closed state and a storage mechanism on a base is shown;
FIG. 5 is a schematic front view of a pet carrier according to an embodiment of the present disclosure during use, wherein a side fixing structure may be coupled to a front seat.

### Reference numerals:

100 pet carrier
   110 box
      111 mounting seat
      112 release button
   120 base
      121 front storage groove
         1211 limiting post
      122 rear storage groove
         1221 limiting rib
   130 front fixing structure
      131 front fixing strap
      132 front connector
   140 rear fixing structure
      141 rear fixing strap
         1411 first fixing strap
         1412 second fixing strap
      142 rear connector
   150 side fixing structure
      151 side fixing strap
      152 side connector
   160 canopy
200 armrest compartment
   210 armrest compartment body
   220 armrest compartment cover
300 front passenger seat
   310 front passenger seat belt fixing mechanism
400 driver seat
   410 driver seat belt fixing mechanism
500 rear seat
   510 anchoring structure

### DETAILED DESCRIPTION

In order to clarify the overall concept of the present disclosure, a detailed explanation will be provided below by way of example in conjunction with the accompanying drawings of the specification.

It should be noted that many specific details will be elaborated in the following description to facilitate a full understanding of the present disclosure. However, the present disclosure may also be implemented using other embodiments different from those described herein. Therefore, the protection scope of the present disclosure is not limited by the specific embodiments disclosed below.

Additionally, in the description of the present disclosure, it is to be understood that terms such as "central," "upper," "lower," "front," "rear," "left," "right," "vertical," "horizontal," "top," "bottom," "inner," "outer," "axial," "radial" and "circumferential" should be construed to refer to the orientation as then described or as shown in the drawings under discussion. These relative terms are for convenience and simplification of description and do not indicate or imply that the component or assembly referred to must have a particular orientation or be constructed or operated in a particular orientation, and hence should not be understood as limitation on the present disclosure.

In the present disclosure, unless specified or limited otherwise, the terms "mounted," "connected," "coupled," "fixed" and the like are used broadly, and may be, for example, fixed connections, detachable connections, or integral connections; may also be direct connections or indirect connections via intervening structures; may also be inner connection or mutual interaction of two elements. However, a specified direct connection indicates that the connection between two entities is not constructed through a transition structure, but only through a connection structure to form a whole. For those skilled in the art, the specific meanings of the above terms in the present disclosure may be understood according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an intervening feature formed therebetween. Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the above phrases in this specification are not necessarily referring to the same embodiment or example of the present disclosure. Furthermore, the particular features, structures, materials, or characteristics may be combined in any suitable manner in one or more embodiments or examples.

The present disclosure provides a pet carrier 100 that includes a fixing structure for fixing with a corresponding fixing facility inside a vehicle, to fix the pet carrier 100 between two front seats of the vehicle, which may balance safety and fun, show the care for pets, and improve user experience and overall satisfaction of the pet carrier 100.

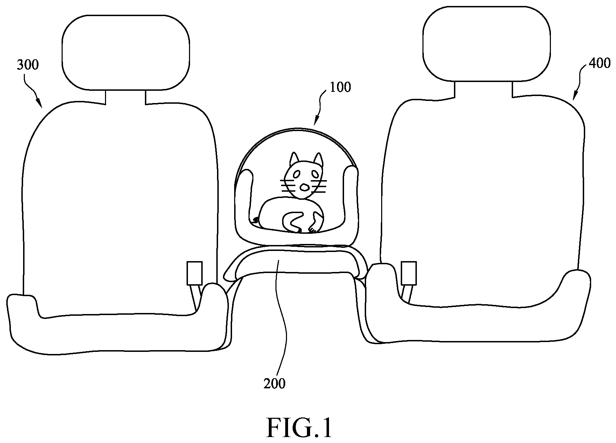

FIGS. 1-3 and FIG. 5 roughly illustrate a position where the pet carrier 100 is arranged inside the vehicle. The pet carrier 100 is roughly horizontally arranged between the front seats of the vehicle (i.e., a driver seat 400 and a front passenger seat 300), and is positioned on a vehicle device between the driver seat 400 and the front passenger seat 300 by fixing the fixing structure of the pet carrier 100 with the fixing facility inside the vehicle.

The front of the vehicle in the present disclosure refers to the front space within the passenger space of the vehicle, including vehicle devices such as front seats, an armrest compartment, a glove compartment, etc. The front seats in the present disclosure refer to the front passenger seat 300 and the driver seat 400 located in a front row inside the vehicle. Relative positions of the front passenger seat 300 and the driver seat 400 in a left-right direction may be exchanged according to local regulations, and are not limited to the embodiments shown in the accompanying drawings.

The vehicle device may be any device between the front seats that may accommodate the pet carrier, such as an armrest compartment 200, but the present disclosure is not limited thereto.

The fixing structure is a component of the pet carrier 100, and may be detachably connected to the pet carrier 100 or fixedly connected to the pet carrier 100. The fixing structure may include a front fixing structure 130 and a rear fixing structure 140, or may also include a side fixing structure 150, which will be described in detail below.

The fixing facility may be any existing facility inside the vehicle, such as the armrest compartment 200, the front passenger seat 300, the driver seat 400, a rear seat 500, a glove compartment, etc., and the present disclosure is not limited thereto.

The arrangement of the pet carrier 100 will be described in detail below.

Referring to FIG. 1, the pet carrier 100 is substantially horizontally located between the front passenger seat 300 and the driver seat 400 of the vehicle. In an embodiment, the pet carrier 100 may be located above the armrest compartment 200. The pet carrier 100 may also be on any other suitable vehicle device between the front passenger seat 300 and the driver seat 400 depending on changes in the vehicle interior.

Taking a situation shown in FIG. 1 as an example, a lower surface of the pet carrier 100 needs to fit, as closely as possible, with an upper surface of the armrest compartment 200 for smooth placement. The pet carrier 100 is substantially symmetrically positioned with respect to a centerline of the armrest compartment 200 in the left-right direction (i.e., transverse to a front-rear direction of the vehicle). The front-rear direction herein is also a longitudinal direction of the vehicle. A width of the pet carrier 100 in the left-right direction may be slightly smaller than a width of the armrest compartment 200. Optionally, the width of the pet carrier 100 in the left-right direction may be equal to or slightly greater than the width of the armrest compartment 200, but less than a distance between the driver seat 400 and the front passenger seat 300.

When viewed from the front, the front passenger seat 300, the pet carrier 100, and the driver seat 400 are arranged in sequence in the left-right direction of the vehicle. A distance between the pet carrier 100 and the front passenger seat 300 may be equal to a distance between the pet carrier 100 and the driver seat 400. Optionally, the distance between the pet carrier 100 and the front passenger seat 300 may also be different from the distance between the pet carrier 100 and the driver seat 400, e.g., less than the distance between the pet carrier 100 and the driver seat 400, to ensure that a driver on the driver seat 400 has sufficient maneuvering space without being interfered by the pet carrier 100.

The pet carrier 100 may be a pet box, a pet basket, or a pet nest, etc., and the present disclosure is not limited thereto. Depending on the size of the pet and the design of dimensions of the pet carrier 100, the pet may lie down or stand in the pet carrier 100. Occupants of the vehicle may play and interact with the pet in the pet carrier 100.

In order to ensure the safety of the pet in the pet carrier 100, while the stability of the pet carrier 100 on the vehicle device (e.g., the armrest compartment 200) is guaranteed, a safety belt or a safety buckle may also be provided inside the pet carrier 100 to securely fix the pet inside the pet carrier 100 by tying the safety belt or by attaching the safety buckle to an object such as clothing or a collar or the like that is worn by the pet.

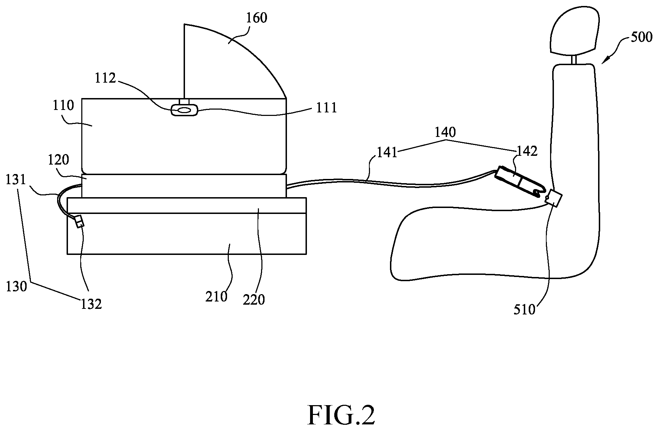

Referring to FIGS. 2-4, the pet carrier 100 may include a box 110, the front fixing structure 130, and the rear fixing structure 140.

Specifically, the box 110 may form a space for accommodating the pet, and may be internally provided with a facility for tying down the pet, such as the safety belt or the safety buckle (not shown) as previously mentioned. The safety buckle may be attached and fixed to the collar of the pet or a clasp on the clothing of the pet. The safety belt may be connected to the collar or clothing of the pet in a configuration similar to the safety buckle, or the safety belt may directly tie down the pet, thereby keeping the pet relatively immobilized inside the box 110.

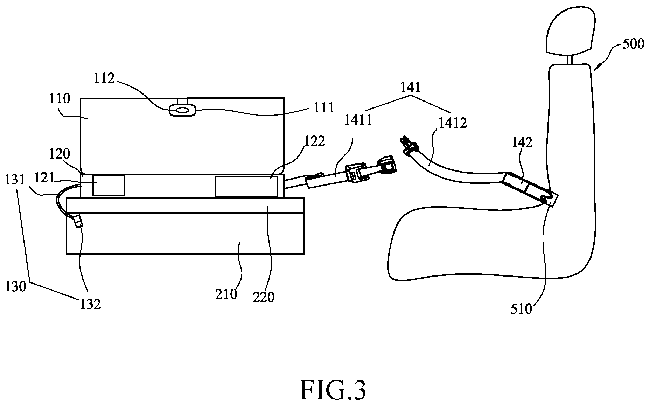

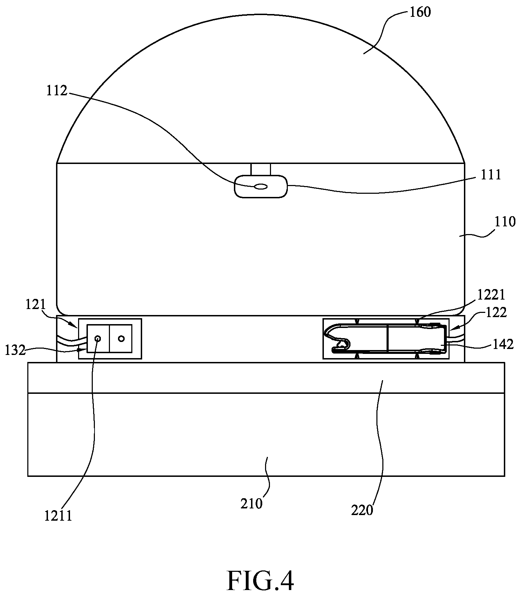

A canopy 160 may be added to the top of the pet carrier 100. The canopy 160 of the box 110 may be configured in various forms, such as fully open, semi-open, or fully closed. FIG. 2 shows a semi-open canopy 160; FIG. 3 shows a fully open canopy 160; and FIG. 4 shows a fully closed canopy 160.

Optionally, the box 110 may be provided with the canopy 160 that is foldable to open or close, so as to realize adjustable opening and closing of the box 110. For example, the canopy 160 may be provided with a frictional rotating shaft, a ratchet pawl mechanism or the like to freely open or close and be positioned at a desired location, so that a user may open and close the canopy 160 at will, and allow the canopy 160 to shield the box 110 to any extent, for example, shielding an opening surface of the box by 15°, 30°, 60°, 90°, 120°, 150°, etc. When the user wants to play and interact with the pet inside the box 110, the canopy 160 may be fully or partially opened. When the pet is resting, the canopy 160 may be fully closed to create a nighttime atmosphere, further ensuring the safety and comfort of the pet, as well as the driving safety.

According to an embodiment, a mounting seat 111 may be provided on an upper part of each of two longitudinal sides of the box 110, and a retaining member (a retaining tab with a locking hole) may be provided on a lower part of each of two longitudinal sides of the canopy 160, thereby facilitating the opening and closing of the canopy 160 in a longitudinal direction of the box. The mounting seat 111 may be provided with a locking clasp capable of engaging with and forming a snap connection with the retaining tab, and be provided with a release button 112 that is operable to release the snap connection between the retaining tab and the locking clasp. After the release button 112 is operated to unlock the retaining tab and the locking clasp, the canopy 160 may be easily removed from the box 110.

Similarly, in another embodiment, a mounting seat 111 may be provided on an upper part of each of front and rear sides of the box 110 (not shown), and a retaining member may be provided on a lower part of each of front and rear sides of the canopy 160, thereby facilitating the opening and closing of the canopy 160 in a transverse direction of the box. Optionally, the canopy 160 may be opened and closed from a side of the front passenger seat 300 towards a side of the driver seat 400. For example, in this configuration, if the canopy 160 is opened to a semi-open state, an occupant on the front passenger seat 300 may play and interact with the pet, and meanwhile influence on the driver on the driver seat 400 may be reduced.

The pet carrier 100 may include a base 120, which is arranged below the box 110 and may be used to support the box 110 or to provide a fixing structure fixed to the vehicle device. The base 120 may be integrated with the box 110 as a single structure, or may also be a detachable component independent of the box 110.

In an embodiment, the box 110 may be mounted and fixed on the base 120. The box 110 and the base 120 may be connected and fastened to each other, for example, by fixing devices, such as an engaging mechanism and a sliding insertion mechanism, at corresponding positions of the box and the base, but the present disclosure is not limited thereto.

A contour of a lower surface of the box 110 may basically match a contour of an upper surface of the base 120, and the lower surface of the box 110 may be fixed to the upper surface of the base 120 by fasteners. It is conceivable that, as needed, the contour of the lower surface of the box 110 may be slightly smaller than the contour of the upper surface of the base 120, so that the upper surface of the base 120 covers the lower surface of the box 110, or vice versa.

The base 120 is placed on the armrest compartment 200. The contour of the lower surface of the base 120 may basically match a contour of an upper surface of the armrest compartment 200. Optionally, the contour of the lower surface of the base 120 may be different from the contour of the upper surface of the armrest compartment 200, as long as the pet carrier 100 may be smoothly placed on the armrest compartment 200.

The base 120 may be integrally injection-molded from plastic. A bottom outer surface of the base 120 may be provided with an anti-slip structure (not shown). The anti-slip structure is in contact with the upper surface of the armrest compartment 200 to increase friction and prevent the pet carrier 100 from slipping off the armrest compartment 200. The anti-slip structure may be a silicone anti-slip layer or a rubber anti-slip layer, etc., and the present disclosure is not limited thereto.

In an embodiment, the pet carrier 100 does not include the base 120, and the bottom of the box 110 may be directly fixed to an armrest compartment cover 220. Similarly, the bottom outer surface of the box 110 may be provided with an anti-slip structure, and is sized to allow the pet carrier 100 to be smoothly placed on the armrest compartment 200.

The armrest compartment 200 typically includes an armrest compartment body 210 and the armrest compartment cover 220 that may be pivotally opened and closed relative to the armrest compartment body 210. An upper surface of the armrest compartment cover 220 is the upper surface of the armrest compartment 200. The lower surface of the pet carrier 100 should fit, as closely as possible, with the upper surface of the armrest compartment cover 220, ensure stable placement of the pet carrier 100. Moreover, the pet carrier 100 may be placed substantially symmetrically about a longitudinal centerline of the armrest compartment 200.

The setup of various fixing structures for the pet carrier 100 will be described below in detail.

Referring to FIGS. 2 and 3, the pet carrier 100 at least includes a front fixing structure 130 and a rear fixing structure 140. The front fixing structure 130 is located on a longitudinal front side of the pet carrier 100 and may be connected and fixed to a limiting structure of a fixing facility located at the front of the vehicle. The rear fixing structure 140 is located on a longitudinal rear side of the pet carrier 100 and may be connected and fixed to a limiting structure of a fixing facility located at the rear of the vehicle.

The front fixing structure 130 may include a front fixing strap 131 and a front connector 132. One end of the front fixing strap 131 extends out from the longitudinal front side of the pet carrier 100. The front fixing strap 131 may be provided with a length adjuster that may adjust its length. The other end of the front fixing strap 131 is connected to the front connector 132. The front connector 132 is used to be connected and fixed to the limiting structure of the fixing facility.

There may be one or more front fixing straps 131 and one or more front connectors 132, the number of which may be set as needed and is not limited.

As shown in FIGS. 2 and 3, in an embodiment, an end of the front fixing strap 131 extending out from the longitudinal front side of the pet carrier 100 may be provided with a ladder lock buckle. Alternatively, the end of the front fixing strap 131 may be a bowknot or other connection structures. Through the ladder lock buckle or the bowknot, the end of the front fixing strap 131 may be detachably connected to a lower part of the pet carrier 100, such as the base 120. Optionally, the end of the front fixing strap 131 may be fixedly connected to the pet carrier 100 (e.g., a seat cloth of the box 110) by sewing or other means.

The front connector 132 connected to the other end of the front fixing strap 131 may also utilize a ladder lock buckle to be fixed to the corresponding limiting structure of the fixing facility. Optionally, the front connector 132 may be a snap fastener, a fixing ring or other connection structures that may be fixed to the corresponding limiting structure of the fixing facility.

The length of the front fixing strap 131 may be adjusted appropriately by the length adjuster (such as a ladder-lock adjustment buckle) provided on the front fixing strap 131.

In an embodiment, the fixing facility of the vehicle is the armrest compartment 200, and the limiting structure is the armrest compartment cover 220. The armrest compartment cover 220 is opened to place the front connector 132 into the armrest compartment 200; then, the armrest compartment cover 220 is tightly closed, so that the front connector 132 is stuck in the armrest compartment body 210 and cannot come out. That is, the fixation and release between the front fixing structure 130 and the armrest compartment 200 may be achieved by opening and closing the armrest compartment cover 220. The front connector 132 may be tightly stuck inside the armrest compartment 200 by adjusting the length adjuster, to ensure the stability of the front side of the pet carrier 100 and prevent the pet carrier 100 from slipping backwards when the vehicle is starting or accelerating.

In another embodiment, the fixing facility of the vehicle may be a glove compartment located in front of the front passenger seat 300. The glove compartment may include a glove compartment body and a glove compartment cover (not shown) that may pivot to cover the glove compartment body. The limiting structure may be the glove compartment cover. Similar to the situation of the armrest compartment, the glove compartment cover is opened to place the front connector 132 into the glove compartment; then, the glove compartment cover is tightly closed, so that the front connector 132 is stuck in the glove compartment and cannot come out. That is, the fixation and release between the front fixing structure 130 and the glove compartment may be achieved by opening and closing the glove compartment cover. In addition, the length of the front fixing strap 131 may be adjusted by adjusting the length adjuster.

Optionally, the limiting structure may be a front passenger seat belt fixing mechanism 310 and/or a driver seat belt fixing mechanism 410. Each seat belt fixing mechanism 310, 410 includes a seat belt insert and a seat belt socket for the seat belt to be inserted therein. The front connector 132 is a fixing ring that may be fitted over the seat belt socket. After the seat belt insert is correspondingly inserted into the seat belt socket, the fixing ring is fitted over the seat belt fixing mechanism. After the length of the front fixing strap 131 is adjusted, the fixing ring may be limited and fixed to ensure the stability of the front side of the pet carrier 100.

Referring to FIGS. 2 and 3, the rear fixing structure 140 is located on the longitudinal rear side of the pet carrier 100 and may be connected and fixed to an anchoring structure 510 on the rear seat 500.

The rear fixing structure 140 may include a rear fixing strap 141 and a rear connector 142. One end of the rear fixing strap 141 extends out from the longitudinal rear side of the pet carrier 100. The rear fixing strap 141 may be provided with a length adjuster that may adjust its length. The end of the rear fixing strap 141 is connected to the pet carrier 100 in a similar manner as the front fixing strap 131, which will not be repeated here.

The rear connector 142 is connected to the other end of the rear fixing strap 141, to match the anchoring structure 510 on the rear seat 500 for connection and fixation. As shown in FIG. 2, the anchoring structure 510 may be an ISOFIX interface or a seat belt socket, and the present disclosure is not limited thereto. Correspondingly, the rear connector 142 may be an ISOFIX connector or a seat belt insert in order to match with the anchoring structure 510. Optionally, the rear fixing structure 140, especially the rear fixing strap 141, is connected to the anchoring structure 510 along a direction substantially parallel to a horizontal plane.

In an embodiment, the anchoring structure 510 may be a LATCH interface or a TETHER interface, and the rear connector 142 may be a LATCH hook or a TETHER hook. When in use, the rear fixing strap 141 extends towards the anchoring structure 510 on the rear seat 500, thereby connecting the rear connector 142 to the anchoring structure 510. Through the length adjuster disposed on the rear fixing strap 141 and capable of adjusting its length, the length of the rear fixing strap 141 may be adjusted appropriately to ensure the stability of the rear side of the pet carrier 100 and prevent the pet carrier 100 from slipping forwards and colliding when the vehicle is braking or decelerating.

One or more rear fixing strap 141 and one or more the rear connector 142 may be provided, the number of which may be set as needed and is not limited.

Referring to FIG. 3, in an embodiment, the rear fixing strap 141 may include a first fixing strap 1411 (i.e., a fixed segment of the rear fixing strap 141) and a second fixing strap 1412 (i.e., a movable segment of the rear fixing strap 141). One end of the first fixing strap 1411 extends from the longitudinal rear side of the pet carrier 100. The other end of the first fixing strap 1411, i.e., a free end, is provided with a buckle or a socket. One end of the second fixing strap 1412 is provided with a socket fitted with the buckle disposed on the first fixing strap 1411 for engagement with the first fixing strap 1411, or is provided with a buckle fitted with the socket disposed on the first fixing strap 1411 for engagement with the first fixing strap 1411. The other end of the second fixing strap 1412 is provided with the rear connector 142, and the second fixing strap 1412 is connected to the rear seat 500 by a combination of the rear connector 142 and the anchoring structure 510.

In an embodiment, the first fixing strap 1411 is provided with a length adjuster that may adjust its length. The first fixing strap 1411 is connected to the second fixing strap 1412, and the second fixing strap 1412 is connected to the anchoring structure 510 on the rear seat 500. By adjusting the length of the first fixing strap 1411, the rear fixing strap 141 is connected to the anchoring structure 510 in a neither too loose nor too tight manner. Optionally, the second fixing strap 1412 may also be provided with a length adjuster that may adjust its length.

In an embodiment, the fixed segment may remain connected to the pet carrier 100 and may be stored on the pet carrier 100. The movable segment may be engaged with the anchoring structure 510 for a long time. When fixing or moving the pet carrier 100, through direct connection or detachment between the fixed segment and the movable segment, it is convenient for the user to operate; especially when the user wants to remove the pet carrier 100, users in the front seats may sit on the seats and operate directly without getting up to remove the connection between the rear fixing strap 141 and the rear seat 500.

When not in use, the movable segment may be flexibly placed on a rear seat or wrapped around a headrest of the rear seat, or placed in a storage bag on the back of a front seat, to facilitate the connection between the fixed segment and the movable segment when fixing the pet carrier 100. Optionally, the movable segment may include a plurality of fixing straps, which are connected to each other by snaps or other connection methods.

The pet carrier 100 may be firmly secured on the armrest compartment 200 between the front passenger seat 300 and the driver seat 400 through the front fixing structure 130 and the rear fixing structure 140, that is, the pet carrier 100 is fixed on the armrest compartment 200 of the vehicle in its longitudinal direction (i.e., the front-rear direction of the vehicle), so that the person sitting on the front passenger seat 300 may interact and play with the pet in the pet carrier 100, and the person sitting on the driver seat 400 may also interact and play with the pet without affecting the driving safety, thereby not only improving the user experience and fun of the pet carrier 100, but also enhancing the pleasure and enjoyment of the pet owner and the pet.

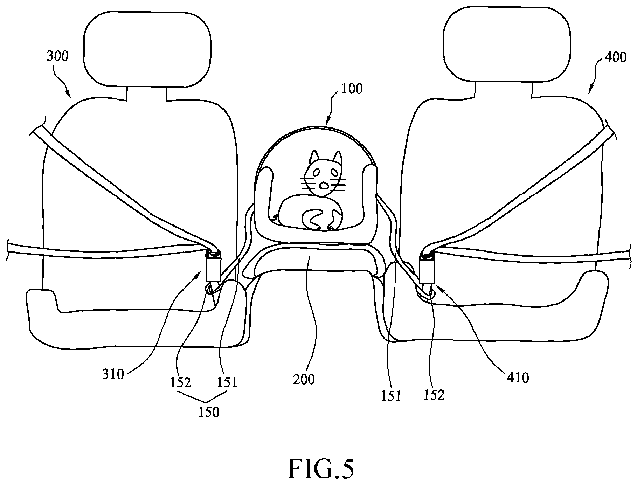

Referring to FIG. 5, the pet carrier 100 may also include a side fixing structure 150. The side fixing structure 150 is located on a traverse side of the pet carrier 100 and may be connected and fixed to the front passenger seat 300 and the driver seat 400. There may be one or more side fixing structures 150 that may be symmetrically arranged on both sides of the pet carrier 100, or only on one side of the pet carrier 100. The present disclosure is not limited thereto.

The side fixing structure 150 may also include a side fixing strap 151 and a side connector 152. One end of the side fixing strap 151 extends out from the traverse side of the pet carrier 100, and its specific connection with the pet carrier 100 is similar to the front fixing strap 131 of the front fixing structure 130, which will not be repeated here. The side fixing strap 151 is provided with a length adjuster that may adjust its length.

The other end of the side fixing strap 151 is connected to the side connector 152. The side fixing strap 151 may also be provided with an adjuster that may adjust a size of the side connector 152, to tighten or loosen it, so that the side connector 152 may be fitted over the front passenger seat 300 and the driver seat 400.

In an embodiment, two side fixing straps 151 extend substantially symmetrically from transverse sides of the pet carrier 100, and two side connectors 152 connected to the two side fixing straps 151 are respectively fitted over the front passenger seat belt fixing mechanism 310 and the driver seat belt fixing mechanism 410. The lengths of the side fixing straps 151 are adjusted to firmly connect the side fixing straps 151 to the seat belt fixing mechanisms, thereby ensuring the stability of the pet carrier 100 in the transverse direction, preventing the pet carrier 100 from slipping off from the transverse sides when the vehicle is turning or bumping, and protecting the safety of the pet in the pet carrier 100 and the driving safety.

Optionally, a limiting structure of the side connector 152 is a headrest of the front passenger seat 300 and/or the driver seat 400, or a neck portion between the headrest and a backrest. The side connector 152 is a webbing retainer that may be adjusted and tightened, and a size of the webbing retainer may be adjusted by the adjuster on the side fixing strap 151. The webbing retainer may be fitted and tightened onto the headrest or the neck portion between the headrest and the backrest of the front passenger seat 300 and/or the driver seat 400 for fixation.

Optionally, the side connector 152 may also adopt the configuration of the front connector 132. The limiting structure of the side connector 152 may also be the armrest compartment 200 or the glove compartment. The side connector may also be placed inside the armrest compartment 200 or the glove compartment, and the side connector 152 of the fixing structure 150 may be fixed by tightly closing the armrest compartment 200 or the glove compartment.

The pet carrier 100 may be more firmly fixed on the armrest compartment 200 between the front passenger seat 300 and the driver seat 400 through fixing structures such as the front fixing structure 130, the rear fixing structure 140, and the side fixing structure 150. This allows the person sitting on the front passenger seat 300 to interact and play with the pet in the pet carrier 100, and also allows the person sitting on the driver seat 400 to interact and play with the pet without affecting the driving safety (e.g., pulling over to wait for someone), which may not only upgrade the user experience and fun of the pet carrier 100, but also improve the pleasure and enjoyment of the pet owner and the pet.

Storage of the fixing structures will be described in detail below.

Referring to FIGS. 3 and 4, a front storage groove 121 and a rear storage groove 122 are provided on a longitudinal side of the base 120. The front storage groove 121 is located at a front portion of the longitudinal side of the base 120, while the rear storage groove 122 is located at a rear portion of the longitudinal side of the base 120. A size of the front storage groove 121 is configured to store the front fixing structure 130 and/or the side fixing structure 150, and a size of the rear storage groove 122 is configured to store the rear fixing structure 140 and/or the side fixing structure 150. The size of the front storage groove 121 and the size of the rear storage groove 122 may depend on specific situations of the fixing structures to be stored.

After the pet carrier 100 finishes usage, the fixing structures are correspondingly stored in the front storage groove 121 and the rear storage groove 122, making the overall appearance of the pet carrier 100 more beautiful and tidy, and also convenient to carry.

Still referring to FIG. 4, based on the specific configuration of the front connector 132, such as a ladder lock buckle, a snap fastener, and a fixing ring, it may be contemplated to provide a limiting post 1211 in the front storage groove 121 to hook up with the front connector 132 of the front fixing structure 130, so that the front fixing structure 130 may be stably stored in the front storage groove 121. Based on the specific configuration of the rear fixing structure 140, a limiting rib 1221 may be provided in the rear storage groove 122 to limit a part (e.g., the first fixing strap 1411 and the socket or buckle provided on its free end) or all of the rear fixing structure 140, so that a part or all of the rear fixing structure 140 may be stably stored in the rear storage groove 122.

It may be contemplated that for the pet carrier 100 without a separate base 120, the storage grooves of the pet carrier may be provided on both sides of the bottom of the box 110, for example, on a lower side of the seat cloth of the box 110, and the storage grooves may be opened and closed through zippers, buttons, ropes, and the like.

The front storage groove 121 and/or the rear storage groove 122 may be used to store the side fixing structure 150. Optionally, the pet carrier 100 may be provided with a dedicated storage groove for the side fixing structure 150, which may be provided between the front storage groove 121 and the rear storage groove 122.

Optionally, a storage bag for storing the fixing structures may be provided in the pet carrier 100, to store the front fixing structure 130, the rear fixing structure 140, and/or the side fixing structure 150 that may be removed from the pet carrier 100.

## Claims

1. A pet carrier (100), mounted on a vehicle device between a front passenger seat (300) and a driver seat (400), wherein the pet carrier (100) comprises a fixing structure for fixing with a corresponding fixing facility inside a vehicle, to fix the pet carrier (100) on the vehicle device between the front passenger seat (300) and the driver seat (400).

2. The pet carrier (100) according to claim 1, wherein the fixing structure comprises a front fixing structure (130) on a longitudinal front side of the pet carrier (100) and a rear fixing structure (140) on a longitudinal rear side of the pet carrier (100), and/or a side fixing structure (150) on a transverse side of the pet carrier (100);
the vehicle device comprises an armrest compartment (200) between the front passenger seat (300) and the driver seat (400).

3. The pet carrier (100) according to claim 2, wherein the front fixing structure (130) comprises a front fixing strap (131) extending out from the longitudinal front side of the pet carrier (100) and a front connector (132) provided on the front fixing strap (131), wherein the front connector (132) is fixed to a limiting structure located in a front of the vehicle.

4. The pet carrier (100) according to claim 3, wherein the front connector (132) is a ladder lock buckle capable of adjusting a length of the front fixing strap (131), the limiting structure is the armrest compartment (200) or a glove compartment, and the front connector (132) is stuck inside the compartment by placing the front connector (132) in the armrest compartment (200) or the glove compartment and closing a compartment cover thereof; or
the front fixing strap (131) is provided with a length adjuster configured to adjust a length of the front fixing strap (131), the front connector (132) is a snap fastener provided at a distal end of the front fixing strap (131), the limiting structure is an armrest compartment (200) with an openable and closable armrest compartment cover (220) or a glove compartment with an openable and closable glove compartment cover, and the front connector (132) is stuck inside the compartment by placing the front connector (132) in the armrest compartment (200) or the glove compartment and closing the armrest compartment cover (220) or the glove compartment cover; or
the front connector (132) is configured as one or more loops, and the limiting structure is a passenger seat belt fixing mechanism and/or a driver seat belt fixing mechanism (410), and the one or more loops are fitted over the front passenger seat belt fixing mechanism (310) and/or the driver seat belt fixing mechanism (410) for fixation.

5. The pet carrier (100) according to any one of claims 2 to 4, wherein the rear fixing structure (140) comprises a rear fixing strap (141) extending out from the longitudinal rear side of the pet carrier (100) and a rear connector (142) provided on the rear fixing strap (141), wherein the rear connector (142) is configured to be anchored and coupled to an anchoring structure on a rear seat (500).

6. The pet carrier (100) according to claim 5, wherein the rear fixing strap (141) is provided with a length adjuster to adjust a length of the rear fixing strap (141), and/or the rear fixing strap (141) comprises a first fixing strap (1411) and a second fixing strap (1412);
the first fixing strap (1411) extends out from the longitudinal rear side of the pet carrier (100), and one of a buckle or a socket is provided at a free end of the first fixing strap (1411);
one end of the second fixing strap (1412) is provided with another of the buckle or the socket for engaging with the first fixing strap (1411), and another end of the second fixing strap (1412) is provided with the rear connector (142).

7. The pet carrier according to any one of claims 5 or 6, wherein the rear fixing strap (141) is provided with a length adjuster to adjust a length of the rear fixing strap (141), and the rear connector (142) is provided at a distal end of the rear fixing strap (141).

8. The pet carrier according to any one of claims 5 to 7, wherein the rear connector (142) is a LATCH hook, which is anchored and coupled to an ISOFIX interface on the rear seat (500).

9. The pet carrier (100) according to any one of claims 2 to 8, wherein the side fixing structure (150) comprises a side fixing strap (151) extending out from a transverse side of the pet carrier (100) and a side connector (152) provided on the side fixing strap (151), wherein the side connector (152) is able to be fixed to the front passenger seat (300) and/or the driver seat (400).

10. The pet carrier (100) according to claim 9, wherein the side fixing strap (151) is provided with a length adjuster to adjust a length of the side fixing strap (151), and the side connector (152) is provided at a distal end of the side fixing strap (151).

11. The pet carrier according to claim 10, wherein the side connector (152) is configured as one or more loops, which are fitted over the front passenger seat belt fixing mechanism (310) and/or the driver seat belt fixing mechanism (410) for fixation.

12. The pet carrier (100) according to claim 11, wherein the side connector (152) is a webbing retainer capable of being adjusted and tightened; the side fixing strap (151) is provided with an adjuster to adjust a size of the webbing retainer; the webbing retainer is fixed by being fitted and tightened onto a headrest of the front passenger seat (300) and/or the driver seat (400), or onto a neck portion between the headrest and a backrest of the front passenger seat (300) and/or the driver seat (400).

13. The pet carrier (100) according to any one of claims 1 to 12, wherein the pet carrier (100) comprises a box (110) and a base (120), the box (110) is fixed on the base (120), and the fixing structure is disposed on the box (110) and/or the base (120);
wherein a periphery of the box (110) and/or the base (120) is provided with a storage groove for storing the fixing structure.

14. The pet carrier according to claim 13, wherein a limiting structure is provided in the storage groove to limit a connector of the fixing structure, to store the fixing structure in the storage groove.

15. The pet carrier according to any one of claims 13 or 14, wherein the bottom of the base (120) is provided with an anti-slip structure.
